Europäisches Patentamt

European Patent Office

Office européen des brevets

(11) Publication number: **0 154 028**
**A2**

## (12) EUROPEAN PATENT APPLICATION

(21) Application number: 84116099.7

(22) Date of filing: 21.12.84

(51) Int. Cl.⁴: **G 05 B 19/405**

(30) Priority: 23.12.83 JP 243235/83

(43) Date of publication of application:
11.09.85 Bulletin 85/37

(84) Designated Contracting States:
DE FR GB IT

(71) Applicant: MITSUBISHI DENKI KABUSHIKI KAISHA
2-3, Marunouchi 2-chome Chiyoda-ku
Tokyo 100(JP)

(72) Inventor: Saitoh, Kimio c/o Shin Moriyama Ryo
No. 3, Matsuba Obata Moriyama-ku
Nagoya-shi Aichi(JP)

(74) Representative: Lehn, Werner, Dipl.-Ing. et al,
Hoffmann, Eitle & Partner Patentanwälte Arabellastrasse
4 (Sternhaus)
D-8000 München 81(DE)

(54) Working method in numerical control machine.

(57) A working method for a numerical control machine (22) in which an overall work schedule is provided on the basis of work procedures for each of plural workpieces (18) and which is automatically determined by the numerical control machine (22). Working for the plural work units is executed using the same tool (12) to thereby eliminate unnecessary exchange of tools with respect to the same tool (12) and to execute the working operations effectively and rapidly.

./...

EP 0 154 028 A2

FIG. 1

WORKING METHOD IN NUMERICAL CONTROL MACHINE

The present invention relates to a working method for an NC (Numerical Control) machining apparatus, and more particularly to a method for providing scheduling so as to minimize the number of the tool exchanges for plural work units and to accordingly reduce the working time needed to complete tasks requiring plural work units.

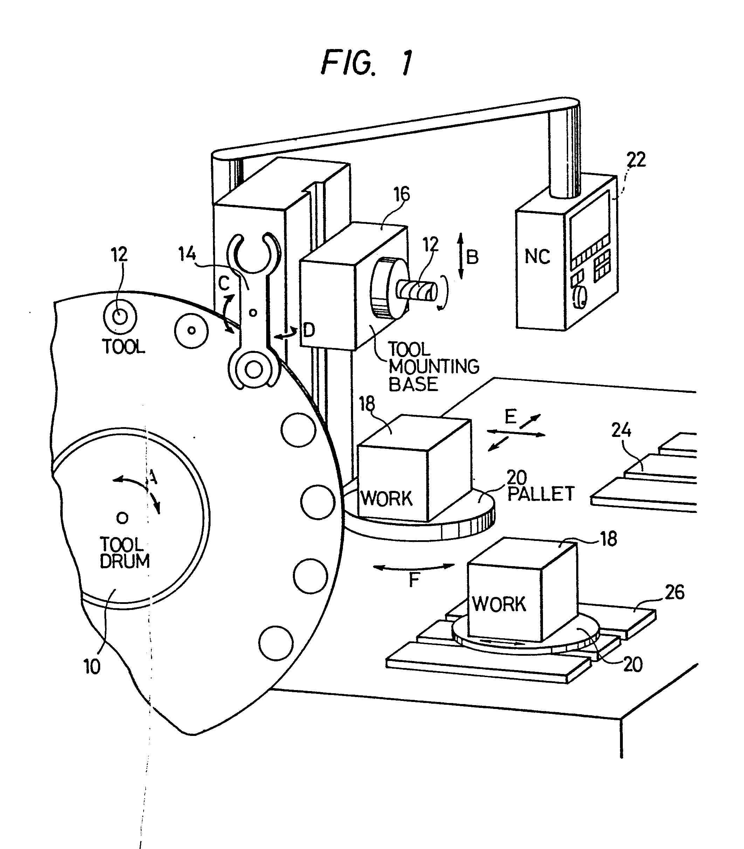

Referring to Fig. 1 of the accompanying drawings, the construction of a general machining center is shown. In this machining center, there are provided a plurality of tools 12 on the peripheral portion of a tool drum mounted so as to be rotatable in the direction A. Each of these tools 12 can be picked up by an arm 14 at a tool exchange position. A tool 12 picked up by the arm 14 is fixed on a tool mounting base 16 mounted so as to be upwardly and downwardly movable in the direction B. A workpiece 18 is placed on a pallet 20 and moved to the position at which the designated work is to be executed. The control of the tool drum 10, arm 14, tool mounting base 16 and pallet 20 is effected by an NC machine 22.

Referring to Fig. 1, tool exchange and work piece exchange operations which take place in the machining center will now be explained.

In the tool exchange operation, the arm 14 holds the tool 12 to be used for the next process until a process currently being executed is terminated. Upon the termination of this process, the tool mounting base 16 moves upwardly in the direction B, then the tool 12 is removed from the arm 14 and a next tool 12 is mounted by movement in the direction of the arrows C and D. Then, the tool mounting base 16 is moved downwardly in the direction B to effect the next process.

The arm 14 sets the previously used tool 12 onto the drum 10 and picks up another tool 12 to be used in the next process, whereupon arm is placed in a waiting condition until the present process is terminated.

Referring next to the workpiece exchange operation, the workpiece 18 placed on the pallet 20 is moved together with the pallet 20 in the direction of the arrow E. In the case where work is to be effected on plural surfaces of the same workpiece 18 with a single tool 12, the pallet 20 mounting the workpiece 18 is rotated as shown by the arrow F. In the case where the same tool 12 is used for another workpiece, the workpiece 18 currently being processed is returned on a pallet base 24 and a pallet 20 placed on a pallet base 26 so that the work operation on the new workpiece 18 may be effected.

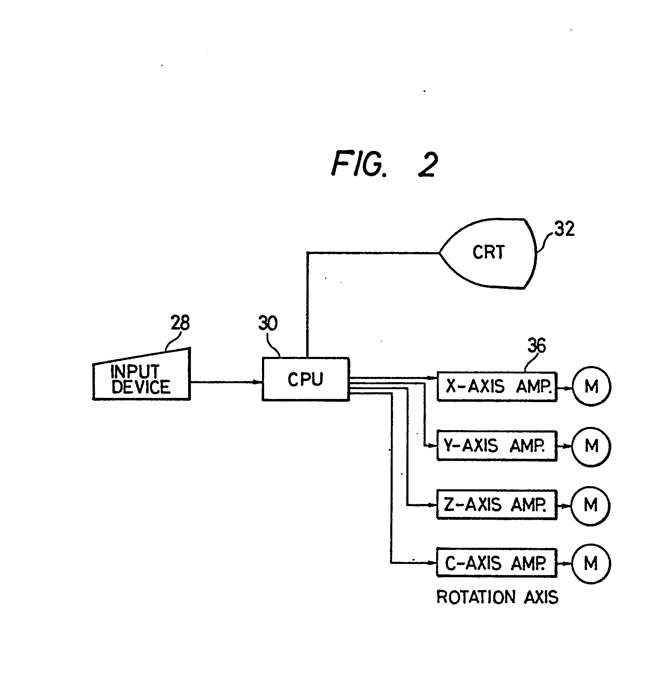

Referring to Fig. 2, the construction of the NC machine shown in Fig. 1 will now be explained.

The NC machine 22 is composed of an input device 28, a CPU 30 and a CRT display 32. Data inputted from the input device 28 is operated upon by the CPU 30, stored in a memory (not shown), and the resulting data is displayed on a CRT 32. The output of the CPU is further outputted to each of the servo amplifiers 36 for the motors 34 driving the tool drum 10, arm 14, tool mounting base 16 and the pallet 20.

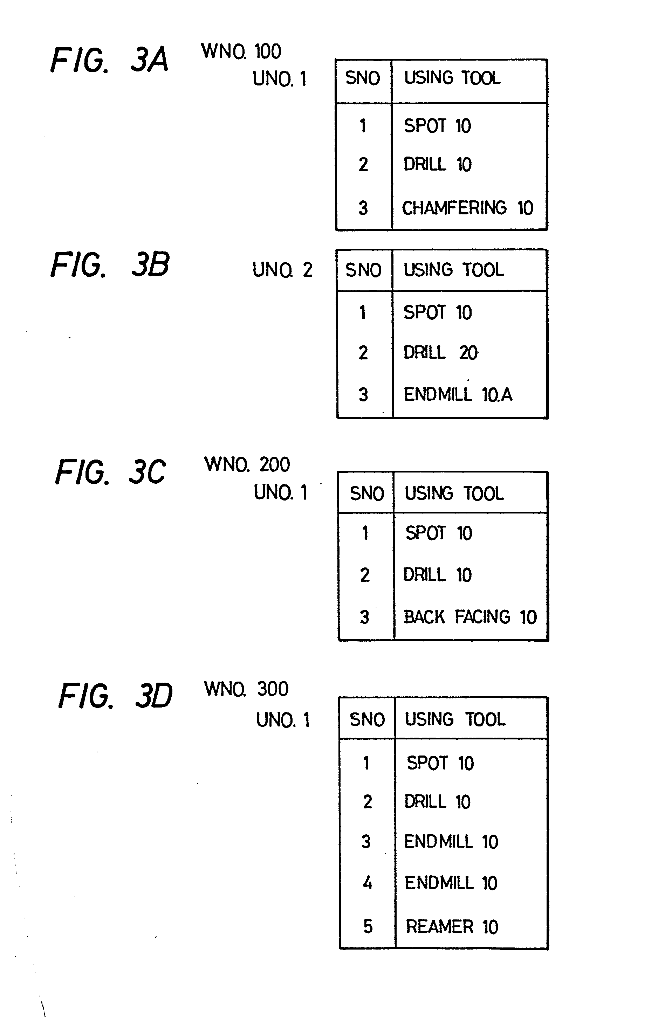

When work operations on the workpiece 18 in the machining center as shown in Fig. 1 are effected using the NC machine 22, the conventional work procedure is automatically carried out as shown in the diagrams of Fig. 3A to 3C. In Figs. 3A and 3B, the same basic work operations (process no. WNO.100) are used and the procedure is automatically carried out in separate work units. However, the work with process no. WNO.200 in the diagram of Fig. 3C is different from the work with the process no. WNO.300 of the diagram of Fig. 3D. In these diagrams, UNO. denote a unit number, and SNO. denotes the step numbers of the working procedure. For the set of operations specified by the diagrams of Fig. 3A to 3D, the

- 4 -

work is carried out using different tools for several different hole-working operations. The operations specified in Figs. 3A to 3D are conducted in the stated order, whereby the exchange of tools is suitably carried out.

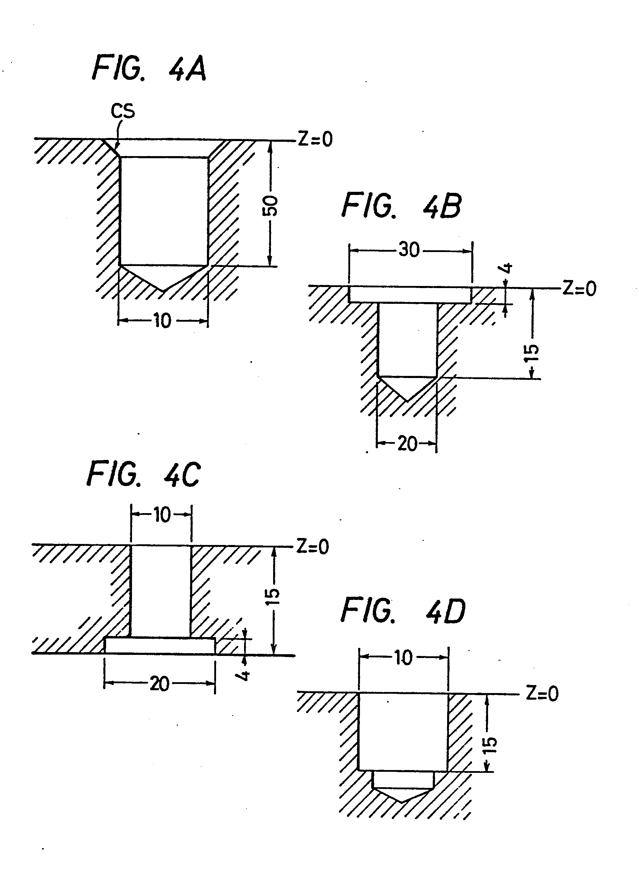

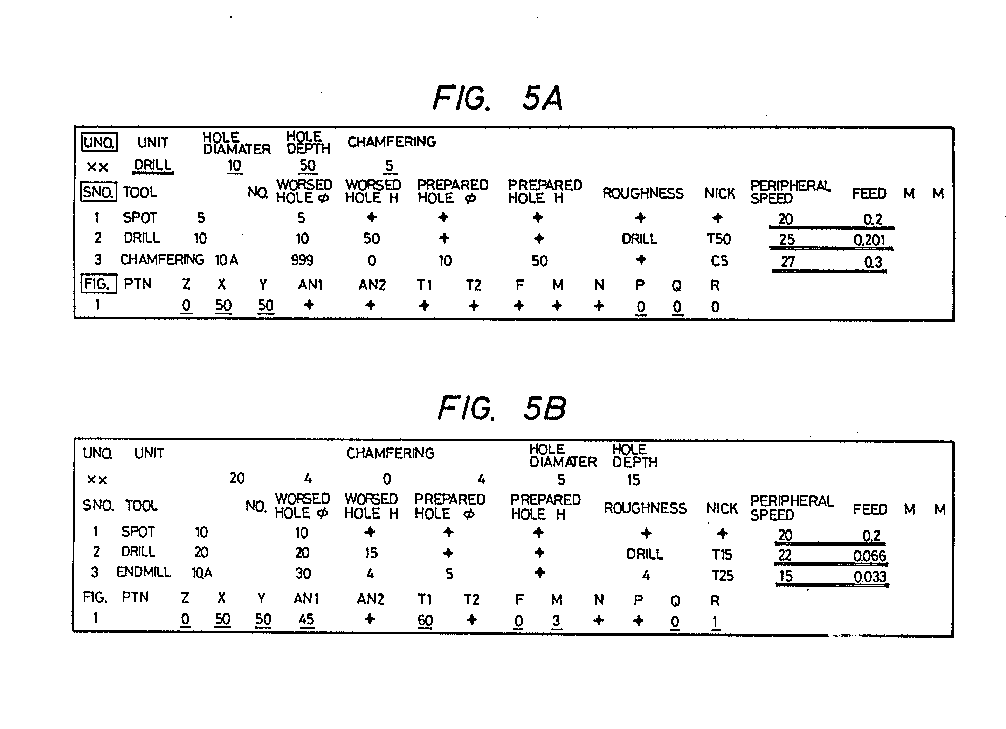

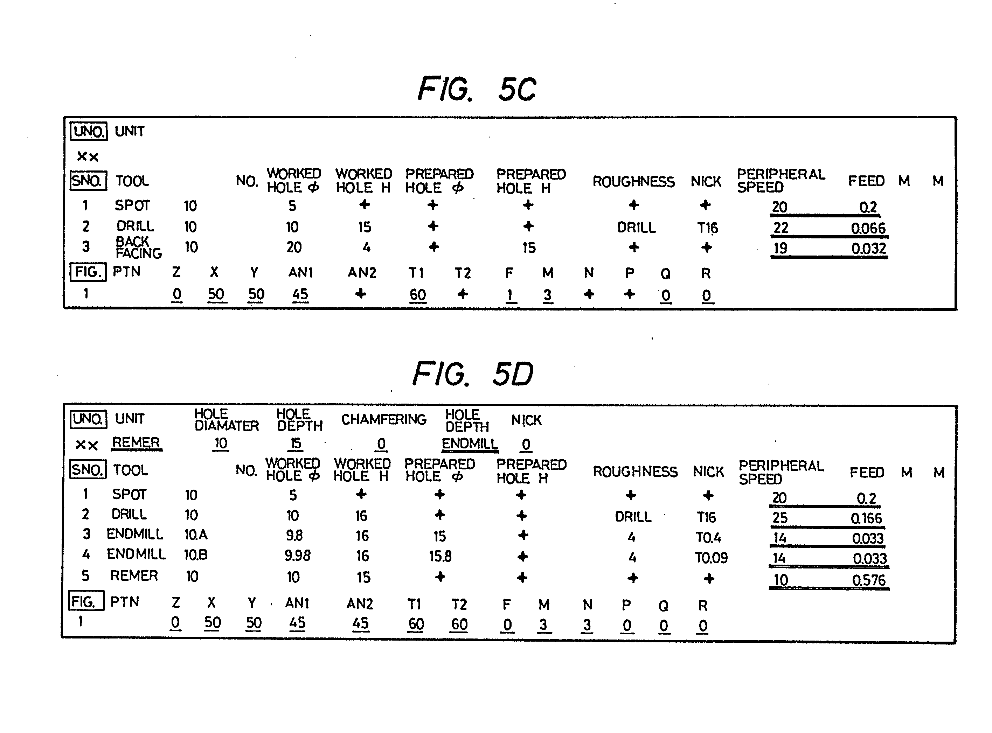

In more detail, at first the data of process no. WNO.100 and the name of the work unit are inputted to the input device 28 of the NC machine 22. For the process of the diagram of Fig. 3A, data indicating work with a drill is inputted. More specifically, a drilling operation to form a hole having a configuration as shown in Fig. 4A is indicated. The detailed instructions for carrying out such operations are shown in Fig. 5A. The corresponding procedure is automatically carried out by the CPU 30 of the NC machine 22. The working procedure of Fig. 3A is the simplified program of the working procedure in Fig. 5A. In Fig. 5A, FIG denotes a work position.

Similarly, the work number WNO.100, which is a faced hole forming operation (the work unit name), is inputted by means of the input device 28 to the unit number UNO.2. (Faced hole work is work for forming a hole having the configuration shown in Fig. 4B.) By such input, the program of the working procedure as shown in Fig. 5B is automatically effected by the CPU 30. Fig. 3B is a simplified diagram of the procedure detailed in Fig. 5B.

Work number WNO.200 and a back-faced hole as the works unit name are inputted to automatically determine program of work procedure as shown in Fig. 4D, whereby the program of work procedure is automatically determined. Fig. 3D is a simplified diagram of the program shown in Fig. 5D.

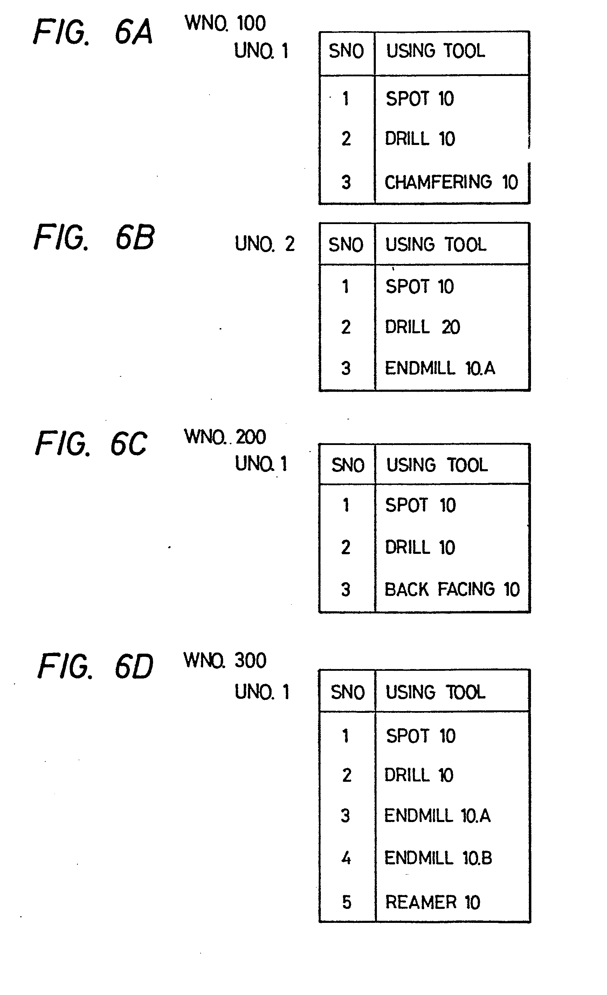

In this manner, a work procedure is determined for each work unit, and the work procedures are executed in the inputted order, starting with Fig. 6A and ending with Fig. 6D. Namely, the work unit UNO.1 of the work number WNO.100, the work unit UNO.2 of the work number WNO.100, the work unit UNO.1 of the work number WNO.200, and the work unit WNO.1 of the work number WNO.300 are executed in the stated order.

In the conventional machining center in which work is executed for each work unit which has been automatically determined by the NC machine, tools need to be frequently exchanged, even in the case where the same tool is used in another work unit. The time required for such exchange of tools is considerable.

An object of the present invention is thus to provide an improved working method using a numeral control machine in which tools are effectively used without performing unnecessary exchanges of the tools.

Another object of the present invention is to provide a working method using a numerical control machine in which all work operations are effectively and quickly executed.

To achieve the above objects, the method according to the present invention is characterized by the steps comprising: inputting plural names of works units representative of the. work operations corresponding to a plurality of workpieces and portions thereof to be worked to an NC machine; automatically determining tools to be used and working procedures for each work unit name to provide a work schedule; checking as to whether the same tool is used in the same work units; determining a work procedure when the same tool is used so that the time required for exchange of the workpiece is minimized; determining a work procedure when the same tool is not used so that the time required for the exchange of the workpiece is minimized; scheduling the procedure of an entire work operation for plural work units in accordance with said work procedure when using the same tool and the procedure for the tool used for each work unit; and working the plural works on the basis of the entire work schedule, wherein all of work procedures of the work units are compared with each other to determine the schedule.

Fig. 1 is a schematic diagram of the construction of a general machining center;

Fig. 2 is a block diagram for explaining the construction of a numerical control machine;

Fig. 3A to 3D are diagrams showing work procedures for each work unit automatically determined by a conventional NC machine in the machining center;

Figs. 4A to 4D show sectional formations of the holes worked in the respective work units shown in Figs. 3A to 3D, respectively;

Figs. 5A to 5D show work programs automatically determined by the NC machine when the work units of Figs. 3A to 3D are inputted to the input device of the NC machine;

Fig. 6 shows a conventional work procedure when the work units shown in Fig. 3A to 3D are inputted;

Fig. 7 shows a diagram explaining a work procedure formulated so that the amount of movement of the workpiece according to a pallet changer is minimized in which priority is given to the tool;

Fig. 8 shows a schedule (work procedure) effected by the machining center of the present invention;

Fig. 9 is a flowchart for formulating the work procedure of Fig. 7 from the work procedures of Figs. 3A to 3D;

Fig. 10 is a flowchart of formulating the work procedure of Fig. 8 from the work procedure of Fig. 7; and

Fig. 11 is a sectional view of a workpiece to be worked by four-axis lathe.

A preferred embodiment of the present invention will now be explained.

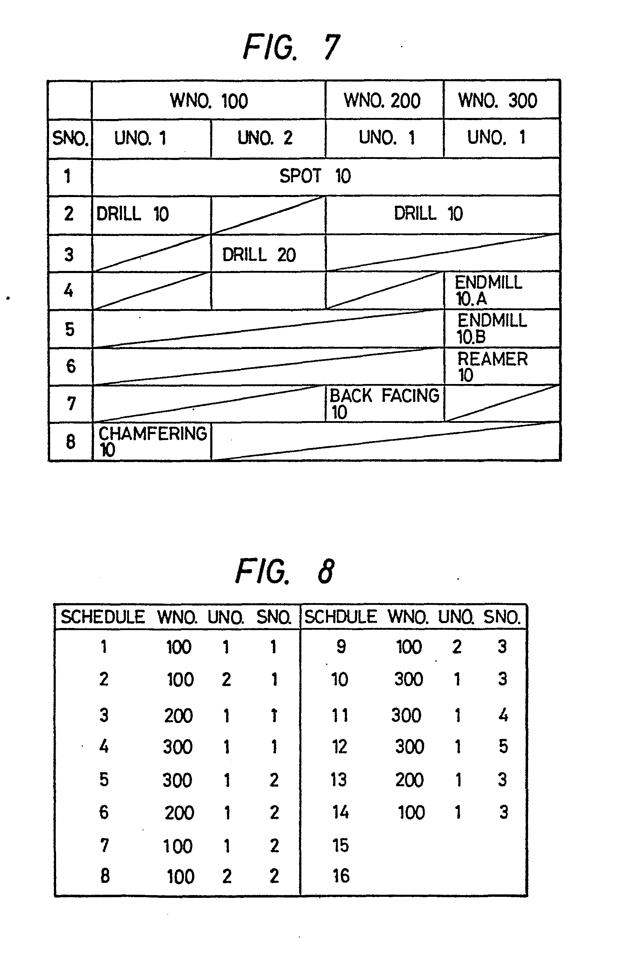

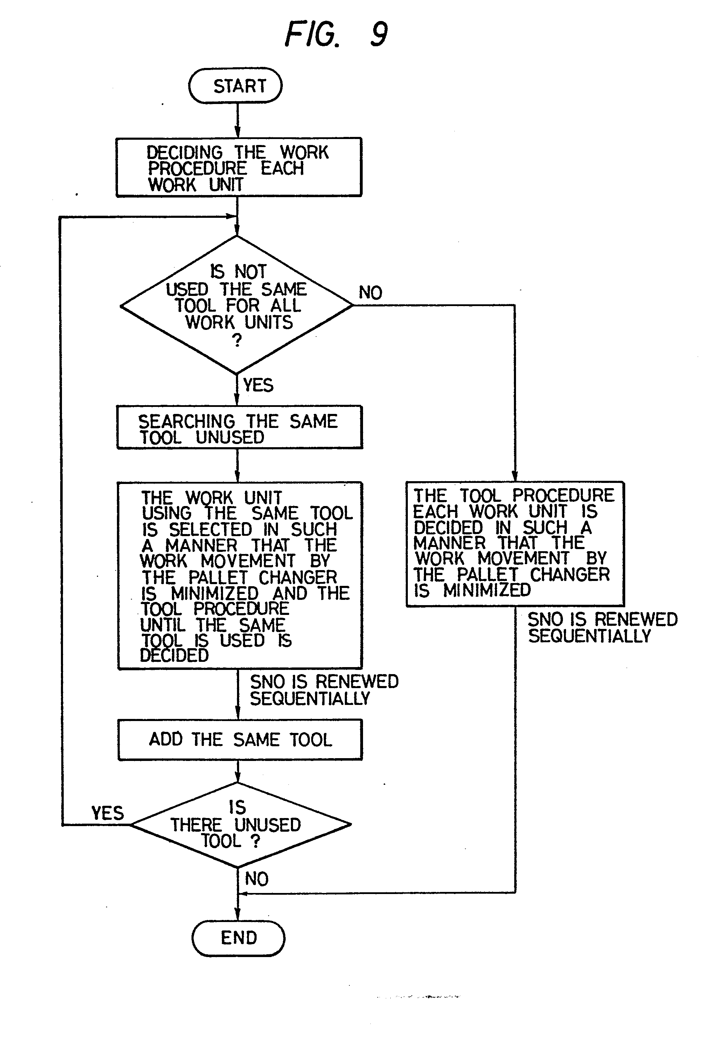

In Fig. 3A to 3D there are shown work procedures of each work unit automatically determined by the conventional NC machine. According to the present invention, a work procedure is determined by giving a priority to the tool to be used as shown in Fig. 7. Then, a schedule as shown in Fig. 8 is determined on the basis of the work procedure in Fig. 7. In the machining center, the workpiece can be set quickly by a pallet changer so that the function of the schedule is effective for all workpieces mounted on the pallets. This is due to the fact that, in order to exchange the tool, it is necessary to raise a tool mounting base upwardly, exchange the tool and then lower the tool mounting base. On the other hand, in the case where a plurality of workpieces are mounted on a single pallet, the tool presently mounted can be used by moving the pallet rotatably or along a straight line.

Therefore, the total working time is reduced in the case where the workpiece is exchanged by the pallet changer when the same tool is used compared with the case of giving priority to the workpiece. The schedule function means the rearrangement of the work procedure of Fig. 3A to 3D to the work procedure in Fig. 8.

The schedule is formulated as indicated below based upon the work procedure automatically determined for each work unit:

(1) check to see whether the same tool is used for the plural work units;

(2) first perform the work for the work units prior to the work using the same tool;

(3) perform the work for all the work units for which the same tool is used; and

(4) repeat items (2) and (3) until another same tool is used.

The workpiece is positioned so that the amount of movement of the workpiece by the pallet changer as shown in Fig. 7 is minimized.

Referring to Fig. 7, the determination of the work procedure will be explained in more detail.

In this embodiment, the names of work units (drill work, faced hole work or the like) are inputted by operating the selection key, then the tool to be used is automatically determined by the main CPU of the NC machine. However, the operator can alter the tool if desired. The route path of tool is processed by the main CPU by inputting the shape or configuration to be worked. The above-described procedure is the same as the conventional one.

According to the present invention, the work procedure indicated in Fig. 7 is thereafter determined by the main CPU of the NC machine. In Fig. 9, a flowchart for determining the work procedure of Fig. 7 based upon the work procedure of Fig. 3 is indicated. The work procedure of Fig. 7 is temporary, namely, the work procedure of Fig. 7 is temporarily held in a memory during processing and is cleared from the memory in the next step.

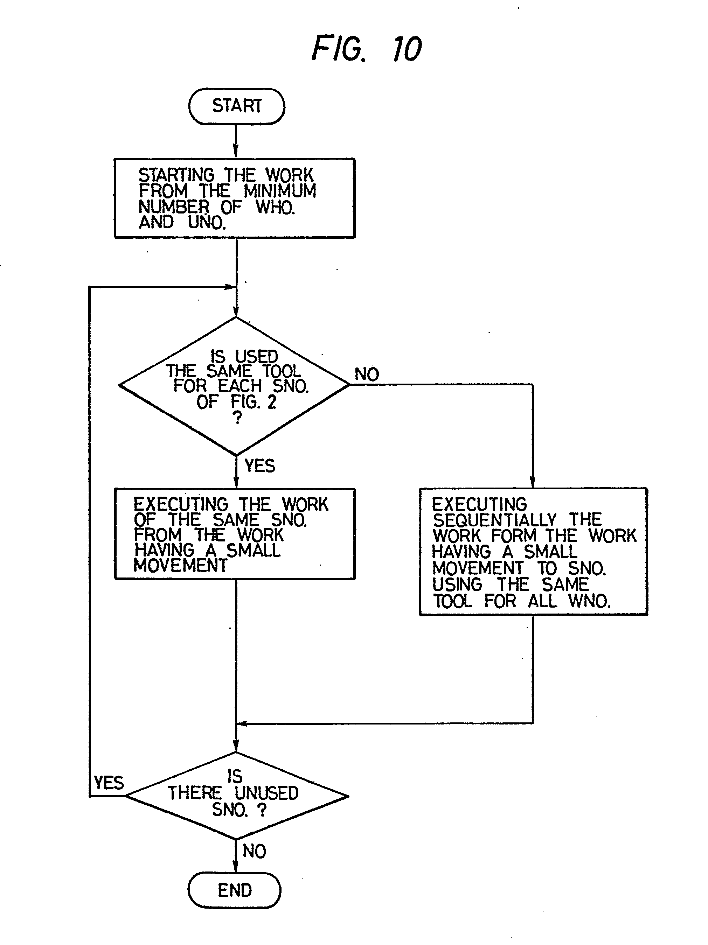

Then, the schedule is arranged as in Fig. 8 on the basis of the results shown in Fig. 7, and such operation is carried out in accordance with the sequential steps illustrated in the flowchart of Fig. 10. The display CRT of the NC machine displays only the conditions of the work procedure in Fig. 8, and the operator can amend the work procedure voluntarily while viewing the display CRT. In the work procedure, the schedule number is shown as 16, but it is changeable voluntarily. Similarly, the number of the work procedure and the number of the work unit in the above embodiment are changeable voluntarily.

The present invention can further be applied to a four-axis lathe, and the present invention may be effective in the case of working plural workpieces using a single spindle.

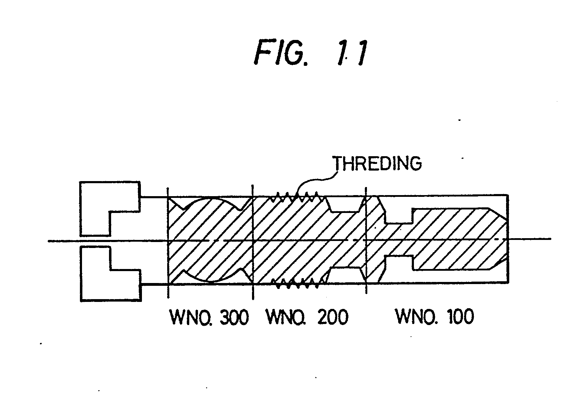

As shown in Fig. 11, in the case where plural members WNO.100, WNO.200, and WNO.300 are worked by a single shaft, the members should be worked using the same tool if possible. Therefore, firstly a bit may be used for the working and then tapping work may be executed.

As described above, according to the present invention, a schedule is provided on the basis of the work procedure of each work unit automatically determined by a NC machine, and the working for plural work units is executed using the same tool, thereby eliminating unnecessary exchanges of tool with respect to the same tool. Thus, the present invention has the advantage that work can be executed effectively and rapidly.

Claims:

1. A working method for working a workpiece (18) in a machining center, said working being executed by numerical control (22), said method characterised by the steps of: inputting plural names of work units, representative of the work corresponding to a pluarality of workpieces (18) and portions to be worked, to the numerical control machine (22); automatically determining a tool (12) to be used and a working procedure for each work unit name to provide a work schedule; determining whether the same tool (12) is used in plural ones of said work units; determining a first work procedure when the same tool (12) is used so that the time required for exchange of the workpieces (18) is minimized; determining a second work procedure when the same tool (12) is not used so that the total time required for the exchange of workpieces (18) is minimized; producing an overall work schedule for said plural work units in accordance with said first and second work procedures; and working said plural workpieces (18) on the basis of said overall work schedule.

2. A working method as set forth in claim 1, characterised in that said overall work schedule is arranged in such a manner that a tool (12) to be next used on the workpiece (18) on which a working operation is presently being executed is given priority when said work procedure using the same tool is terminated.

.3. A working method as set forth in claim 2, characterised in that said overall work schedule is provided in such a manner that work procedures using different tools (12) for each work unit are given prioritity over a work procedure using the same tool.

4. A working method as set forth in claim 1, characterised in that said overall work schedule is displayed on a cathode-ray tube (32) of said numerical control machine.

5. A working method as set forth in claim 4, characterised in that said overall work schedule displayed on said cathode-ray tube (32) is amendable by a manual input.

6. A working method as set forth in claim 1, characterised in that said workpiece is moved and exchanged by a pallet changer (20).

7. A working method as set forth in claim 6, characteriesed in that said pallet changer (20) is controlled by said numerical control machine.

8. A working method as set forth in claim 1, characterised in that said machining center is a four-axis lathe.

9. A working method as set forth in claim 1, characterised in that a hole work is executed for said plural workpieces (18).

10. A working method as set forth in claim 9, characterised in that said name of said work unit is inputted by signals corresponding to the name of said work unit.

11. A working method as set forth in claim 10, characterised in that said name of the work unit is one of drill work, faced hole work, and back faced hole work.

12. A working method as set forth in claim 11, characterised in that said tool (12) to be used is one of a spot, drill, chamfering tool, and back facing reamer.

13. A working method for working a workpiece (18) in a machining center, said working being executed by numerical control (22), said method characterised by the steps of: inputting plural names of work units, representative of work corresponding to a plurality of workpieces (18) and portions to be worked, to a numerical control machine (22); automatically determining a tool (12) to be used and a working procedure for each work unit name to provide a work schedule; determining whether the same tool (12) is used in plural ones of said work units; determining a first work procedure so that the total time required for the exchange of workpieces (18) is minimized when the same tool (12) is not used; producing an overall work schedule for said plural work units in accordance with said working procedure and said first work procedure; and working said plural workpieces (18) on the basis of said overall work schedule.

0154028

FIG. 1

# FIG. 2

0154028

## FIG. 3A

WNO. 100

UNO. 1

| SNO | USING TOOL |
|-----|------------|
| 1 | SPOT 10 |
| 2 | DRILL 10 |
| 3 | CHAMFERING 10 |

## FIG. 3B

UNO. 2

| SNO | USING TOOL |
|-----|------------|
| 1 | SPOT 10 |
| 2 | DRILL 20 |
| 3 | ENDMILL 10.A |

## FIG. 3C

WNO. 200

UNO. 1

| SNO | USING TOOL |
|-----|------------|
| 1 | SPOT 10 |
| 2 | DRILL 10 |
| 3 | BACK FACING 10 |

## FIG. 3D

WNO. 300

UNO. 1

| SNO | USING TOOL |
|-----|------------|
| 1 | SPOT 10 |
| 2 | DRILL 10 |
| 3 | ENDMILL 10 |
| 4 | ENDMILL 10 |
| 5 | REAMER 10 |

## FIG. 4A

CS

Z=0

50

10

## FIG. 4B

30

4

Z=0

15

20

## FIG. 4C

10

Z=0

15

4

20

## FIG. 4D

10

Z=0

15

## FIG. 5A

| UNO. | UNIT | HOLE DIAMATER | HOLE DEPTH | CHAMFERING | | | | | | | | |
|------|------|---------------|-----------|------------|---|---|---|---|---|---|---|---|
| ×× | DRILL | 10 | 50 | 5 | | | | | | | | |

| SNO. | TOOL | | NO. | WORSED HOLE φ | WORSED HOLE H | PREPARED HOLE φ | PREPARED HOLE H | ROUGHNESS | NICK | PERIPHERAL SPEED | FEED | M | M |
|------|------|----|-----|----------------|----------------|------------------|------------------|-----------|------|------------------|------|---|---|
| 1 | SPOT | 5 | | 5 | + | + | + | + | + | 20 | 0.2 | | |
| 2 | DRILL | 10 | | 10 | 50 | + | + | DRILL | T50 | 25 | 0.201 | | |
| 3 | CHAMFERING | 10A | | 999 | 0 | 10 | 50 | + | C5 | 27 | 0.3 | | |

| FIG. | PTN | Z | X | Y | AN1 | AN2 | T1 | T2 | F | M | N | P | Q | R |
|------|-----|---|----|----|-----|-----|----|----|---|---|---|---|---|---|
| 1 | | 0 | 50 | 50 | + | + | + | + | + | + | + | 0 | 0 | 0 |

## FIG. 5B

| UNO. | UNIT | | CHAMFERING | | | HOLE DIAMATER | HOLE DEPTH | | | | |
|------|------|---|------------|---|---|---------------|------------|---|---|---|---|
| ×× | | 20 | 4 | 0 | 4 | 5 | 15 | | | | |

| SNO. | TOOL | | NO. | WORSED HOLE φ | WORSED HOLE H | PREPARED HOLE φ | PREPARED HOLE H | ROUGHNESS | NICK | PERIPHERAL SPEED | FEED | M | M |
|------|------|----|-----|----------------|----------------|------------------|------------------|-----------|------|------------------|------|---|---|
| 1 | SPOT | 10 | | 10 | + | + | + | + | + | 20 | 0.2 | | |
| 2 | DRILL | 20 | | 20 | 15 | + | + | DRILL | T15 | 22 | 0.066 | | |
| 3 | ENDMILL | 10A | | 30 | 4 | 5 | + | 4 | T25 | 15 | 0.033 | | |

| FIG. | PTN | Z | X | Y | AN1 | AN2 | T1 | T2 | F | M | N | P | Q | R |
|------|-----|---|----|----|-----|-----|----|----|---|---|---|---|---|---|
| 1 | | 0 | 50 | 50 | 45 | + | 60 | + | 0 | 3 | + | + | 0 | 1 |

0154028

## FIG. 5C

| UNO. | UNIT | | | | | | | | | | | | | | |
|---|---|---|---|---|---|---|---|---|---|---|---|---|---|---|---|
| ×× | | | | | | | | | | | | | | | |
| SNO. | TOOL | | NO. | WORKED HOLE φ | WORKED HOLE H | PREPARED HOLE φ | | PREPARED HOLE H | | ROUGHNESS | | NICK | PERIPHERAL SPEED | FEED | M M |
| 1 | SPOT | 10 | | 5 | + | + | | + | | + | | + | 20 | 0.2 | |
| 2 | DRILL | 10 | | 10 | 15 | + | | + | | DRILL | | T16 | 22 | 0.066 | |
| 3 | BACK FACING | 10 | | 20 | 4 | + | | 15 | | + | | + | 19 | 0.032 | |
| FIG. | PTN | Z | X | Y | AN1 | AN2 | T1 | T2 | F | M | N | P | Q | R | |
| 1 | | 0 | 50 | 50 | 45 | + | 60 | + | 1 | 3 | + | + | 0 | 0 | |

## FIG. 5D

| UNO. | UNIT | HOLE DIAMATER | HOLE DEPTH | CHAMFERING | HOLE DEPTH | NICK | | | | | | | | | |
|---|---|---|---|---|---|---|---|---|---|---|---|---|---|---|---|
| ×× | REMER | 10 | 15 | 0 | ENDMILL | 0 | | | | | | | | | |
| SNO. | TOOL | | NO. | WORKED HOLE φ | WORKED HOLE H | PREPARED HOLE φ | | PREPARED HOLE H | | ROUGHNESS | | NICK | PERIPHERAL SPEED | FEED | M M |
| 1 | SPOT | 10 | | 5 | + | + | | + | | + | | + | 20 | 0.2 | |
| 2 | DRILL | 10 | | 10 | 16 | + | | + | | DRILL | | T16 | 25 | 0.166 | |
| 3 | ENDMILL | 10.A | | 9.8 | 16 | 15 | | + | | 4 | | T0.4 | 14 | 0.033 | |
| 4 | ENDMILL | 10.B | | 9.98 | 16 | 15.8 | | + | | 4 | | T0.09 | 14 | 0.033 | |
| 5 | REMER | 10 | | 10 | 15 | + | | + | | + | | + | 10 | 0.576 | |
| FIG. | PTN | Z | X | Y | AN1 | AN2 | T1 | T2 | F | M | N | P | Q | R | |
| 1 | | 0 | 50 | 50 | 45 | 45 | 60 | 60 | 0 | 3 | 3 | 0 | 0 | 0 | |

0154028

## FIG. 6A

WNO. 100
UNO. 1

| SNO | USING TOOL |
|-----|------------|
| 1 | SPOT 10 |
| 2 | DRILL 10 |
| 3 | CHAMFERING 10 |

## FIG. 6B

UNO. 2

| SNO | USING TOOL |
|-----|------------|
| 1 | SPOT 10 |
| 2 | DRILL 20 |
| 3 | ENDMILL 10.A |

## FIG. 6C

WNO. 200
UNO. 1

| SNO | USING TOOL |
|-----|------------|
| 1 | SPOT 10 |
| 2 | DRILL 10 |
| 3 | BACK FACING 10 |

## FIG. 6D

WNO. 300
UNO. 1

| SNO | USING TOOL |
|-----|------------|
| 1 | SPOT 10 |
| 2 | DRILL 10 |
| 3 | ENDMILL 10.A |
| 4 | ENDMILL 10.B |
| 5 | REAMER 10 |

# FIG. 7

| SNO. | WNO. 100 | | WNO. 200 | WNO. 300 |
|---|---|---|---|---|
| | UNO. 1 | UNO. 2 | UNO. 1 | UNO. 1 |
| 1 | SPOT 10 | | | |
| 2 | DRILL 10 | | DRILL 10 | |
| 3 | | DRILL 20 | | |
| 4 | | | | ENDMILL 10.A |
| 5 | | | | ENDMILL 10.B |
| 6 | | | | REAMER 10 |
| 7 | | | BACK FACING 10 | |
| 8 | CHAMFERING 10 | | | |

# FIG. 8

| SCHEDULE | WNO. | UNO. | SNO. | SCHDULE | WNO. | UNO. | SNO. |
|---|---|---|---|---|---|---|---|
| 1 | 100 | 1 | 1 | 9 | 100 | 2 | 3 |
| 2 | 100 | 2 | 1 | 10 | 300 | 1 | 3 |
| 3 | 200 | 1 | 1 | 11 | 300 | 1 | 4 |
| 4 | 300 | 1 | 1 | 12 | 300 | 1 | 5 |
| 5 | 300 | 1 | 2 | 13 | 200 | 1 | 3 |
| 6 | 200 | 1 | 2 | 14 | 100 | 1 | 3 |
| 7 | 100 | 1 | 2 | 15 | | | |
| 8 | 100 | 2 | 2 | 16 | | | |

# FIG. 9

```
        ( START )
            │
            ▼
   ┌──────────────────┐
   │ DECIDING THE WORK│
   │ PROCEDURE EACH   │
   │ WORK UNIT        │
   └──────────────────┘
            │
            ▼
       ╱────────╲
      ╱ IS NOT   ╲
     ╱ USED THE SAME╲      NO
    ◇ TOOL FOR ALL   ◇──────────────┐
     ╲ WORK UNITS  ╱                │
      ╲   ?      ╱                  │
       ╲────────╱                   │
            │ YES                    │
            ▼                        │
   ┌──────────────────┐              │
   │ SEARCHING THE SAME│             │
   │ TOOL UNUSED       │             │
   └──────────────────┘             │
            │                        │
            ▼                        ▼
   ┌──────────────────┐   ┌──────────────────┐
   │ THE WORK UNIT     │   │ THE TOOL PROCEDURE│
   │ USING THE SAME TOOL│  │ EACH WORK UNIT IS │
   │ IS SELECTED IN SUCH│  │ DECIDED IN SUCH A │
   │ A MANNER THAT THE │   │ MANNER THAT THE   │
   │ WORK MOVEMENT BY  │   │ WORK MOVEMENT BY  │
   │ THE PALLET CHANGER│   │ THE PALLET CHANGER│
   │ IS MINIMIZED AND THE│ │ IS MINIMIZED      │
   │ TOOL PROCEDURE    │   └──────────────────┘
   │ UNTIL THE SAME    │
   │ TOOL IS USED IS   │     SNO IS RENEWED
   │ DECIDED           │     SEQUENTIALLY
   └──────────────────┘
            │  SNO IS RENEWED
            │  SEQUENTIALLY
            ▼
   ┌──────────────────┐
   │ ADD THE SAME TOOL │
   └──────────────────┘
            │
            ▼
  YES    ╱────────╲
 ┌──────◇  IS      ◇
 │       ╲THERE UNUSED╱
 │        ╲ TOOL ? ╱
 │         ╲──────╱
 │            │ NO
 │            ▼
 │         ( END )
```

0154028

## FIG. 10

```
         ┌─────────┐
         │  START  │
         └────┬────┘
              │
              ▼
    ┌──────────────────────┐
    │ STARTING THE WORK    │
    │ FROM THE MINIMUM     │
    │ NUMBER OF WHO.       │
    │ AND UNO.             │
    └──────────┬───────────┘
              │
              ▼
         ╱─────────╲
        ╱ IS USED   ╲
       ╱ THE SAME TOOL╲   NO
      ╱ FOR EACH SNO.  ╲──────────┐
       ╲  OF FIG. 2    ╱          │
        ╲     ?       ╱           │
         ╲───────────╱            │
              │ YES               │
              ▼                   ▼
    ┌──────────────────┐  ┌──────────────────┐
    │ EXECUTING THE WORK│ │ EXECUTING         │
    │ OF THE SAME SNO.  │ │ SEQUENTIALLY THE  │
    │ FROM THE WORK     │ │ WORK FORM THE WORK│
    │ HAVING A SMALL    │ │ HAVING A SMALL    │
    │ MOVEMENT          │ │ MOVEMENT TO SNO.  │
    └─────────┬─────────┘ │ USING THE SAME    │
              │           │ TOOL FOR ALL WNO. │
              │           └─────────┬─────────┘
              │                     │
              ▼                     │
              ◄─────────────────────┘
              │
              ▼
  YES    ╱─────────╲
  ┌──────╱   IS      ╲
  │     ╱ THERE UNUSED ╲
  │      ╲   SNO. ?   ╱
  │       ╲─────────╱
  │            │ NO
  │            ▼
  │       ┌─────────┐
  │       │   END   │
  │       └─────────┘
```

# FIG. 11

THREDING

WNO. 300    WNO. 200    WNO. 100